Europäisches Patentamt

European Patent Office

Office européen des brevets

(19)

(11)  EP 0 433 565 B1

(12)  **EUROPÄISCHE PATENTSCHRIFT**

(45) Veröffentlichungstag und Bekanntmachung des Hinweises auf die Patenterteilung:
  **28.08.1996  Patentblatt 1996/35**

(51) Int Cl.[6]:  **G02B 6/44**

(21) Anmeldenummer: **90117734.5**

(22) Anmeldetag: **14.09.1990**

(54) **Lichtwellenleiter-(LWL)-Endverschluss eines LWL-Phasenseils**

Light wave guide end connection for a light wave guide phase conductor

Extrémité d'un guide d'ondes lumineuses pour un conducteur de phase avec un guide d'ondes lumineuses

(84) Benannte Vertragsstaaten:
  **AT DE ES FR GB NL**

(30) Priorität: **21.12.1989  DE 3942245**

(43) Veröffentlichungstag der Anmeldung:
  **26.06.1991  Patentblatt 1991/26**

(73) Patentinhaber: **Felten & Guilleaume Energietechnik AG**
  **D-51058 Köln (DE)**

(72) Erfinder:
  • **Amerpohl, Uwe, Dipl.-Ing.**
   **D-5060 Bergisch Gladbach 2 (DE)**

  • **Beck, Manfred, Dipl.-Ing.**
   **D-5000 Köln 90 (DE)**
  • **Harjes, Bernd, Dr.-Ing.**
   **W-5060 Bergisch Gladbach 2 (DE)**
  • **Siegert, Wolfgang**
   **D-5860 Iserlohn 7 (DE)**

(56) Entgegenhaltungen:
  **EP-A- 0 067 614**       **EP-A- 0 137 244**
  **EP-A- 0 265 737**       **DE-A- 3 205 616**
  **DE-A- 3 544 142**       **GB-A- 2 074 753**

**Beschreibung**

Es ist ein Endverschluß für in einem Hochspannungsbauteil geführte Lichtwellenleiter nach dem Oberbegriff des Hauptanspruchs bekannt (EP-A1-0265737). In dieser Schrift werden Alternativen von Einbettungen der Lichtwellenleiter im Isolatorkörper, bzw. in Silikonschichten dargestellt. Nähere Angaben über den Prozeß der Einbettung werden nicht gemacht. Als Orte der Einbettungen werden Nuten oder Aussparungen im Isolatorrohr, in der Silikonummantelung oder sogar in der Außenfläche der Silikonschirme vorgeschlagen. Die Unterbringung in Aussparungen bedingt, daß die Aussparungen in den entsprechenden Bauteilen hergestellt werden müssen und daß vor dem Zusammenbau des Endverschlusses die Lichtwellenleiter in die Aussparungen eingelegt werden müssen. Dies ist mit entsprechendem Vorbereitungs- bzw. Arbeitsaufwand verbunden.

Der Erfindung liegt die Aufgabe zugrunde, einen Endverschluß auszubilden, der bezüglich der Unterbringung der Lichtwellenleiter, bzw. dessen Herstellaufwand möglichst einfach ist, der im Werk vollständig vorgefertigt werden kann und daß er an der Baustelle nur aufgestellt und angeschlossen zu werden braucht.

Die Lösung dieser Aufgabe ist mit den kennzeichnenden Merkmalen des Anspruchs 1 angegeben. Die Unteransprüche betreffen Einzelheiten und vorteilhafte Weiterbildungen des Endverschlusses.

Die Ausbildung sowohl des Kopf- als auch des Fußflansches mit je einem Ansatzrohrstück als Zentrierungselement für das aus mehreren rohrförmigen Abschnitten bestehende äußere Schutzelement schafft beim Zusammenbau des Endverschlusses einen Ringraum zwischen dem Kunststoffrohr und der Innenwandung des Schutzelements, in dem der oder die Lichtwellenleiter-Abschnitte unter sicherem Potentialabbau verlaufen und sie mit Silikonkautschuk schützend eingebettet sind. Kunststoffrohr und Silikon-Außenschichten erzielen hinreichende Isolierfestigkeit bei möglichst kleiner Länge des Endverschlusses.

Die Vorteile der Erfindung bestehen im wesentlichen darin, daß der LWL-Endverschluß im Werk vollständig vorgefertigt werden kann und an der Baustelle nur aufgestellt und an das LWL-Phasenseil angeschlossen zu werden braucht. Das GFK-Rohr des Isolators übernimmt die Stützerfunktion und ermöglicht es durch den relativ großen Außendurchmesser, daß der LWL mit relativ kurzer Schlaglänge um das GFK-Rohr gewunden werden kann, was wiederum die elektrische Längsfestigkeit des Isolators erhöht. An der Baustelle wird der Endverschluß lediglich auf die Grundplatte montiert, wonach das LWL-Phasenseil angeklemmt und die einzelnen LWL-Enden (aus dem Seil, dem LWL-Endverschluß und der weiterführenden LWL-Leitung) in den beiden Spleißkästen miteinander entsprechend verschweißt werden.

Zwei Ausführungsbeispiele der Erfindung sind in der Zeichnung dargestellt und werden im folgenden näher beschrieben. Es zeigen von der Seite und teilweise geschnitten:

- Fig. 1 einen vollständigen LWL-Endverschluß für ein LVL-Phasenseil mit einer Kopfplatte als Seilklemmenhalterung,
- Fig. 2 einen LWL-Endverschluß wie zuvor, jedoch mit einem Bolzen als Seilklemmenhalterung und ohne die Seitenteile Seilklemme und unteres Spleißgehäuse,
- Fig. 3 die vollständige Kopfarmatur zu dem in Fig. 2 gezeigten Endverschluß, und
- Fig. 4 die Kopfarmatur wie zuvor, jedoch von oben.

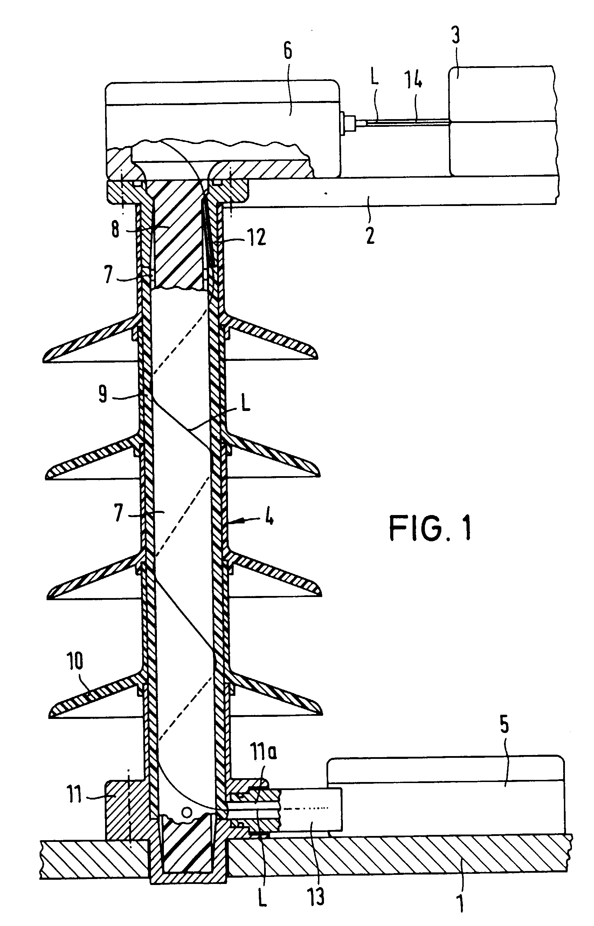

Wie Fig. 1 zeigt, ist in der Längsachse des Endverschluß-Isolators 4 ein Rohr aus glasfaserverstärktem Kunststoff (das GFK-Rohr 7) angeordnet, auf dessen Enden je ein metallener Rohrflansch geklebt ist. An den Kopfflansch 12 ist das obere Spleißgehäuse 6 geflanscht, von dem aus eine Halterung (die Kopfplatte 2) zur Seilklemme 3 und die LWL-Verbindung 14 zum LWL-Phasenseil S geführt sind. Der Fußflansch 11 ist in die geerdeten Grundplatte 1 eingelassen, neben ihm ist das untere Spleißgehäuse 5 angeordnet, und beide sind durch das Rohr 13 miteinander verbunden. Der LWL L (einer oder mehrere, und diese einzeln oder als Bündelader) ist wie folgt geführt; aus dem oberen Spleißgehäuse 6, durch eine Bohrung im Kopfflansch 12 auf das GFK-Rohr 7, mit kurzem Schlag um das GFK-Rohr zum unteren Rohrende, und durch die seitliche Bohrung 11a im Fußflansch und das Verbindungsrohr 13 in das untere Spleißgehäuse 5. Das GFK-Rohr 7 ist mit Silikonkautschuk innen vollständig ausgegossen (Rohrausfüllung 8) und außen rohrförmig umgossen (Isolatorschutzrohr 9).

Auf dem Isolatorschutzrohr sitzen wie üblich mehrere Schirme 10 aus Silikonkautschuk. Ihre rohrförmigen Ansätze werden von den beiden Rohrflanschen 11 und 12 zentriert. Die Schirme bilden zusammen mit dem GFK-Rohr 7 die Gußform für das Isolatorschutzrohr.

Der LWL L ist in den Biegungen bei und in den Spleißgehäusen 5 und 6 sowie um das GFK-Rohr 7 mit einem Biegeradius $\rho$ von mindestens 25 mm geführt. Dabei ist er um ein GFK-Rohr vom Außenradius r mit einer Schlaglänge von $s = 2 \pi ((\rho - r) r)^{\frac{1}{2}}$ gewunden, und er ist tangential zum GFK-Rohr auf es zu- und von ihm abgeführt. Beispiel: GFK-Rohr-Außendurchmesser 2 r = 37 mm, LWL-Biegeradius $\rho$ = 30 mm, LWL-Schlaglänge s = 92 mm.

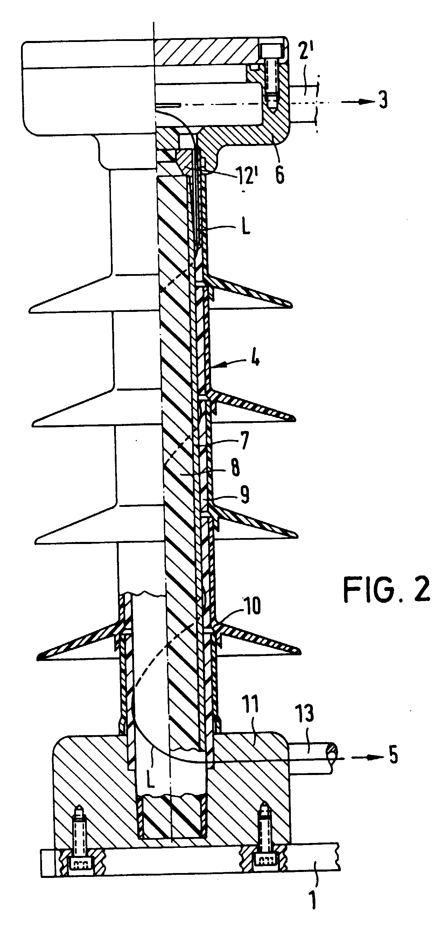

Wie Fig. 1 und Fig. 2 zeigen, besteht jeder Rohrflansch 11 und 12 aus einer an die jeweilige Gegenplatte 1 bzw. 2 oder 6 angepaßten Platte und einem an das Isolatorschutzrohr 9 angepaßten Stutzen (Ansatzrohrstück). Während der Stutzen des Fußflansches 11 das Schutzrohr 9 umschließt, stößt der Stutzen des Kopfflansches 12 stumpf an die Stirnfläche des Schutzrohres. Das GFK-Rohr 7 läuft an jedem Ende konisch zu, und die Innenfläche eines jeden Flansches verläuft entsprechend.

Beim Fußflansch 11 hat dessen Ring eine seitliche Bohrung IIa, in die das eine Ende eines zum unteren Spleißgehäuse 5 führenden, den LWL L umgebenden, metallenen Verbindungsrohres 13 eingesetzt ist. Beim Kopfflansch 12 oder 12' verläuft die Bohrung für den LWL quer durch die Platte und längs durch die Wand des Stutzens.

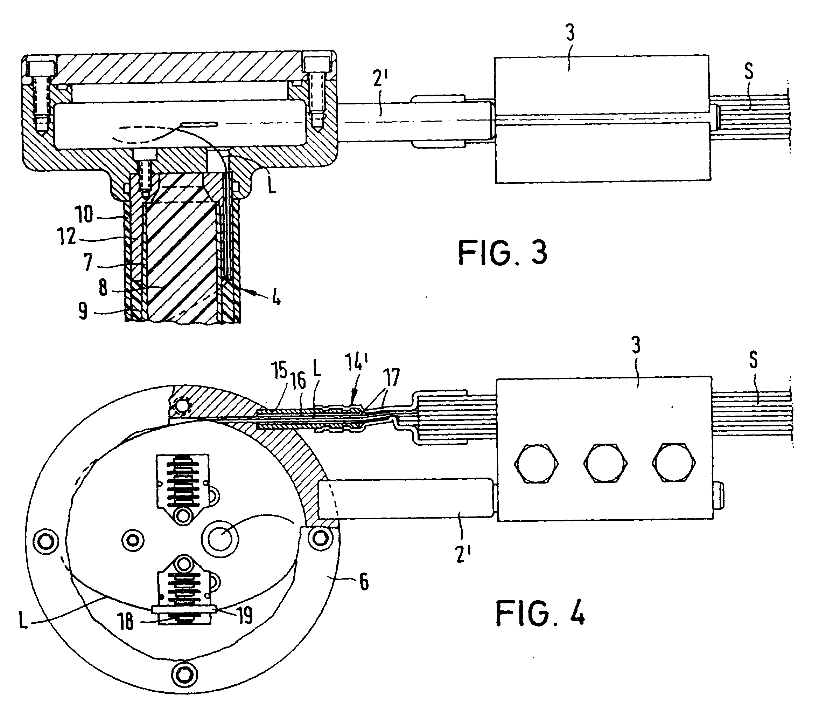

Fig. 3 und 4 zeigen die bevorzugte Ausführungsform der Kopfarmatur des LWL-Endverschlusses. Beim Kopfflansch 12' haben Stutzen und Stirnring den gleichen Außendurchmeser wie das Isolatorschutzrohr 9, der Flansch ist in den Boden des oberen Spleißgehäuses 6 eingefügt, und beide sind miteinander verschraubt.

Die Spleißgehäuse 5 und 6 haben die übliche runde Ausführungsform und enthalten die LWL-Spleißhalter 18, welche die LWL-Spleiße (Spleißschutzelemente) 19 aufnehmen. An das obere Spleißgehäuse 6 ist seitlich der waagrecht abstehende Bolzen 2' angesetzt, auf dessen Ende die Seilklemme 3 aufgeschoben und somit gehaltert ist. Parallel zu diesem Bolzen, aber tangential am Umfang des Spleißgehäuses, ist der Stutzen 15 angesetzt, der den gehäuseseitigen Teil der LWL-Verbindung 14' zum LWL-Phasenseil S bildet, indem durch ihn der von einem Edelstahlröhrchen 16 umgebene LWL L des LWL-Phasenseils geführt ist. Das Röhrchen 16 und der seilseitige Teil der LWL-Verbindung 14' sind von je einem Schrumpfschlauch 17 umgeben. Nicht nur hier, sondern bei allen Aus- und Einführungen ist der LWL mit einem Schrumpf- oder Silikonschlauch geschützt.

Dieser LWL-Endverschluß findet Anwendung bei Phasenseilen mit integrierten LWL in Hochspannungs-Freileitungen bis 30 kV, und zwar als eine das Potential abbauende Herausführung der LWL aus dem Seil zur geerdeten Grundplatte.

**Patentansprüche**

1. Endverschluß für in einem Phasenseil (S) geführte Lichtwellenleiter (L) bestehend aus:

einem glasfaserverstärkten Kunststoffrohr (7);
einem Kopfflansch (12) und einem Fußflansch (11), die an den Enden des Kunststoffrohrs (7) befestigt sind;
einer an dem Kopfflansch (12) montierten Kopfarmatur, die Mittel zum Befestigen des Phasenseils (S) und ein oberes Lichtwellenleiter-Spleißgehäuse (6) umfaßt;
einer an dem Fußflansch (11) montierten Fußarmatur, die eine unteres Lichtwellenleiter-Spleißgehäuse (5) umfaßt;
einem oder mehreren Lichtwellenleiter-Abschnitten (L), der oder die sich zwischen den beiden Spleißgehäusen (5,6) erstrecken und in Windungen entlang der äußeren Mantelfläche des Kunststoffrohrs (7) in Silikonkautschuk (9) eingebettet verlaufen;
einer metallenen Grundplatte (1), an der der Fußflansch (11) derart befestigt ist, daß das Kunststoffrohr (7) senkrecht zur Grundplatte (1) steht;
und einem das Kunststoffrohr (7) umgebenden, rohrförmigen Schutzelement mit entlang dem Kunststoffrohr (7) im Abstand voneinander angeordneten radialen Silikonschirmen (10);

**dadurch gekennzeichnet,** daß das Schutzelement aus mehreren rohrförmigen Abschnitten besteht, von denen jeder mit einem der radialen Schirme (10) versehen ist,

daß sowohl der Kopf- (12) als auch der Fußflansch (11) mit einem Ansatzrohrstück versehen ist, das mit dem jeweiligen benachbarten Endabschnitt des Schutzelements zwecks Zentrierung des Schutzelements verbunden ist,
daß der oder die Lichtwellenleiter-Abschnitte (L) durch den Ringraum (9) zwischen dem Kunststoffrohr (7) und der Innenwandung des Schutzelements verlaufen, welcher mit oben genanntem Silikonkautschuk (9) gefüllt ist,
und daß das Kunststoffrohr (7) ebenfalls mit Silikonkautschuk (8) gefüllt ist.

2. Endverschluß nach Anspruch 1, **dadurch gekennzeichnet,** daß das Kunststoffrohr (7) an jedem Ende einen Innenkonus hat und die Innenflächen eines jeden Ansatzrohrstücks der Flansche (11,12) einen jeweils dazu passenden Außenkonus bilden.

3. Endverschluß nach einem der vorangehenden Ansprüche, **dadurch gekennzeichnet,** daß in dem Ansatzrohrstück mindestens eines Flansches (11,12) eine Öffnung zum Durchführen des oder der Lichtwellenleiter (L) vorhanden ist.

4. Endverschluß nach Anspruch 3, **dadurch gekennzeichnet,** daß das Ansatzrohrstück des Fußflansches (11) eine seitliche Bohrung (IIa) hat, in die das eine Ende eines zum unteren Spleißgehäuse (5) führenden, den oder die Lichtwellenleiter (L) umgebenden, metallenen Verbindungsrohres (13) eingesetzt ist.

5. Endverschluß nach einem der Ansprüche 3 oder 4, **dadurch gekennzeichnet,** daß der Kopfflansch (12,12') im wesentlichen aus einer Kopfplatte (2) und dem Ansatzrohrstück besteht und daß die Bohrung für den oder die Lichtwellenleiter (L) quer durch die Kopfplatte (2) und längs durch die Wand des Ansatzrohrstücks verläuft.

**6.** Endverschluß nach einem der vorangehenden Ansprüche, **dadurch gekennzeichnet,** daß der oder die Lichtwellenleiter (L) in den Biegungen, in den Spleißgehäusen (5,6) sowie um das Kunststoffrohr (7) mit einem Biegeradius ρ von mindestens 25 mm geführt ist, wobei er um das Kunststoffrohr (7) mit Außendurchmesser r mit einer Schlaglänge von s = 2 π [(ρ- r) r]1/2 gewunden und tangential zum Kunststoffrohr (7) auf es zu- oder von ihm abgeführt ist.

**7.** Endverschluß nach einem der vorangehenden Ansprüche, **dadurch gekennzeichnet,** daß an der Kopfarmatur mit Abstand vom oberen Spleißgehäuse (6) eine Klemme (3) zur Halterung des Phasenseils (S) vorhanden ist.

**8.** Endverschluß nach Anspruch 7, **dadurch gekennzeichnet,** daß an der Kopfarmatur eine Platte (2) ausgebildet ist, die sowohl das obere Spleißgehäuse (6) als auch die Phasenseilklemme (3) trägt.

**9.** Endverschluß nach einem der Ansprüche 1 bis 6, **dadurch gekennzeichnet,** daß am oberen Spleißgehäuse (2) waagerecht abstehend eine Klemme (3) zur Halterung des Phasenseils (S) vorhanden ist.

**10.** Endverschluß nach Anspruch 9, **dadurch gekennzeichnet,** daß das obere Spleißgehäuse (2) rund ausgeführt ist und daß tangential zu seinem Umfang ein Rohrstutzen (15) angesetzt ist, durch den der oder die Lichtwellenleiter (L) zum Phasenseil (S) geführt sind.

**Claims**

**1.** An end connector for light wave guides (L) guided in a phase conductor (S), comprising:

a glass-fibre-reinforced plastics tube (7);
a head flange (12) and a base flange (11) fixed to the ends of the plastics tube (7);
a head fitting mounted on the head flange (12) and comprising means for fixing the phase conductor (S) and an upper light-wave-guide splicing housing (6);
a base fitting mounted on the base flange (11) and comprising a lower light-wave-guide splicing housing (5);
one or more light-wave-guide portions (L) extending between the two splicing housings (5, 6) and being embedded in silicone rubber (9) in turns along the outer circumferential surface of the plastics tube (7);
a metal base plate (1), to which the base flange (11) is fixed in such a manner that the plastics tube (7) stands perpendicularly to the base plate (1);
and a tubular protection member surrounding the plastics tube (7) and having radial silicone shields (10) arranged along the plastics tube (7) at a distance from each other;

characterised in that the protection member comprises a plurality of tubular portions, each of which is provided with one of the radial shields (10),

in that both the head flange (12) and the base flange (11) are provided with a tubular attachment connected to the respective adjacent end portion of the protection member for the purpose of centering the protection member,
in that the light-wave-guide portion or portions (L) extend through the annular chamber (9) arranged between the plastics tube (7) and the inner wall of the protection member and filled with the aforesaid silicone rubber (9),
and in that the plastics tube (7) is also filled with silicone rubber (8).

**2.** An end connector according to claim 1, characterised in that the plastics tube (7) has an inner cone at each end and the inner surfaces of each tubular attachment of the flanges (11, 12) form an outer cone adapted to the respective inner cone.

**3.** An end connector according to any one of the preceding claims, characterised in that an opening for the passage of the light wave guide or guides (L) is provided in the tubular attachment of at least one flange (11, 12).

**4.** An end connector according to claim 3, characterised in that the tubular attachment of the base flange (11) has a lateral bore (11a), into which is inserted one end of a metal connecting tube (13) leading to the lower splicing housing (5) and surrounding the light wave guide or guides (L).

**5.** An end connector according to either one of claims 3 and 4, characterised in that the head flange (12, 12') substantially comprises a head plate (2) and the tubular attachment, and in that the bore for the light wave guide or guides (L) extends transversely through the head plate (2) and longitudinally through the wall of the tubular attachment.

**6.** An end connector according to any one of the preceding claims, characterised in that the light wave guide or guides (L) are guided at the bends, in the splicing housings (5, 6) and round the plastics tube (7) with a bending radius ρ of at least 25mm, the light wave guide being wound round the plastics tube (7), of outer diameter r, with a lay length of s =

$2\pi[(\rho\text{-}r)r]^{\frac{1}{2}}$ and being guided tangentially towards or away from the plastics tube (7).

7. An end connector according to any one of the preceding claims, characterised in that a clamp (3) for the holding the phase conductor (S) is provided on the head fitting at a distance from the upper splicing housing (6).

8. An end connector according to claim 7, characterised in that a plate (2) is formed on the head fitting and carries both the upper splicing housing (6) and the phase-conductor clamp (3).

9. An end connector according to any one of claims 1 to 6, characterised in that a clamp (3) for holding the phase conductor (S) is provided on the upper splicing housing (2) [sic - 6] and projects horizontally therefrom.

10. An end connector according to claim 9, characterised in that the upper splicing housing (2) [sic - 6] is of round construction and in that tangentially to the periphery thereof is attached a tubular connecting piece (15), through which the light wave guide or guides (L) are guided to the phase conductor (S).

**Revendications**

1. Connecteur d'extrémité pour un guide de lumière (L) d'un câble de phase (S) comprenant :

   - un tube en matière plastique (7) renforcée par des fibres 5 de verre,
   - une bride de tête (12) et une bride de pied (11) fixées aux extrémités du tube en matière plastique (7),
   - une armature de tête qui se monte sur la bride de tête (12) et comprend des moyens pour fixer le câble de phase 10 (S) et un boîtier de connexion supérieur (6) pour le guide de lumière,
   - une armature de pied qui se monte sur la bride de pied (11) et comprend un boîtier de connexion (5) inférieur pour le guide de lumière,
   - un ou plusieurs segments de guide de lumière (L) s'étendant entre les deux boîtiers de connexion (5, 6) et intégrés dans le caoutchouc au silicone (9), des spires le long de la surface-enveloppe extérieure du tube en matière plastique (7),
   - une plaque de base (1), métallique, à laquelle est fixée la bride de pied (11) de façon que le tube de matière plastique (7) soit perpendiculaire à la plaque de base (1),
   - ainsi qu'un élément de protection tubulaire entourant le 25 tube en matière plastique (7), avec des écrans au silicone (10), radiaux, disposés à intervalle les uns des autres,

caractérisé en ce que

   l'élément protecteur se compose de plusieurs segments tubulaires dont chacun est muni d'un écran radial (10), à la fois la bride de tête (12) et la bride de pied (11) sont munies d'un embout tubulaire relié aux segments d'extrémité voisins respectifs de l'élément de protection pour centrer cet élément de protection,
   le ou les segments de guide de lumière (L) passent par le volume annulaire (9), entre le tube en matière plastique (7) et la paroi intérieure de l'élément protecteur, rempli par le caoutchouc au silicone (9), et
   le tube en plastique (7) est également rempli de caoutchouc au silicone (8).

2. Connecteur d'extrémité selon la revendication 1, caractérisé en ce que
   le tube en matière plastique (7) présente à chaque extrémité un cône intérieur et les surfaces intérieures de chaque élément tubulaire de raccordement des brides (11, 12) forment un cône extérieur adapté de manière correspondante.

3. Connecteur d'extrémité selon l'une des revendications précédentes,
   caractérisé en ce que
   l'embout tubulaire comprend dans au moins une bride (11, 12) une ouverture pour le passage du ou des guides de lumière (L).

4. Connecteur d'extrémité selon la revendication 3, caractérisé en ce que
   l'embout tubulaire de la bride de pied (11) comporte un perçage latéral (11a) recevant une extrémité d'un tube de liaison (13), métallique, entourant le ou les guides de lumière (L) et aboutissant au boîtier de connexion inférieur (5).

5. Connecteur d'extrémité selon l'une des revendications 3 ou 4,
   caractérisé en ce que
   la bride de tête (12, 12') se compose principalement d'une plaque de tête (2) et d'un embout tubulaire et le perçage pour le ou les guides de lumière (L) traverse la plaque de tête (2) et passe le long de la paroi de l'embout tubulaire.

6. Connecteur d'extrémité selon l'une des revendications précédentes,
   caractérisé en ce que
   le ou les guides de lumière (L) sont conduits dans les parties courbes, dans les boîtiers de connexion (5, 6) ainsi qu'autour du tube de matière plastique (7) avec un rayon de courbure $\rho$ au moins égal à 25 mm et autour du tube en matière plastique (7) avec un diamètre extérieur (R) d'une longueur de pas $S = 2\pi \sqrt{(\rho - r)} r$ et sortent ou arrivent tangentiellement au tube en matière plastique (7).

7. Connecteur d'extrémité selon l'une des revendications précédentes,
caractérisé par
une borne (3) sur l'armature de tête à une certaine distance du boîtier de connexion (6) supérieur pour fixer le câble de phase (S).

8. Connecteur d'extrémité selon la revendication 7,
caractérisé par
une plaque (2) prévue sur l'armature de tête, cette plaque portant à la fois le boîtier de connexion (6) supérieur et la borne du câble de phase (3).

9. Connecteur d'extrémité selon l'une des revendications 1 à 6,
caractérisé par
une borne (3) en saillie horizontale du boîtier de connecteur (2), supérieur, pour fixer le câble de phase (S).

10. Connecteur d'extrémité selon la revendication 9,
caractérisé en ce que
le boîtier de connecteur (2) supérieur est rond et tangentiellement à sa périphérie il est prévu un embout tubulaire (15) traversé par le ou les guides de lumière (L) vers le câble de phase (S).

FIG. 1

FIG. 2

FIG. 3

FIG. 4

EP 0 433 565 B1